# EUROPEAN PATENT SPECIFICATION

(11) **EP 2 878 076 B1**
(45) Date of publication and mention of the grant of the patent: **15.04.2020**
(21) Application number: 13773369.7
(22) Date of filing: 23.07.2013
(51) Int. Cl.: H02P 29/00, H02J 7/00, H02K 11/00, H02J 7/02, H02K 11/33

(54) **ELECTRIC MOTOR WITH ONBOARD INVERTER**
ELEKTROMOTOR MIT GEHÄUSEINTEGRIERTEM UMRICHTER
MOTEUR ÉLECTRIQUE DOTÉ D'UN ONDULEUR INTÉGRÉ

(30) Priority: 24.07.2012 IT VR20120155
(43) Date of publication of application: 03.06.2015
(73) Proprietor: Motive S.r.l., 25014 Castenedolo (IT)
(72) Inventor: CORSINI, Giuseppe, I-25075 Nave (IT); BOSIO, Giorgio, I-25080 Nuvolento (IT)
(74) Representative: Modiano, Micaela Nadia
(86) International application number: PCT/IB2013/056031
(87) International publication number: WO 2014/016767

(56) References cited:
- US-A1- 2002 171 396
- US-A1- 2009 121 675
- US-A1- 2009 146 605
- US-B1- 7 196 485
- US-B2- 8 085 543

## Description

The present invention relates to an electric motor and, specifically, to an electric motor with onboard inverter.

Electric motors, typically three-phase asynchronous motors, with onboard inverters are known and widely used for various applications.

Normally, onboard inverters are controlled by way of buttons or rotary controls which are supported directly by the inverter or by way of a remote control panel which is connected to the inverter by electrical connection cables or wires.

Typically, the inverters on board such types of motors make it possible, in addition to adjusting the output speed of the drive shaft, to set some operating parameters of the electric motor.

In particular, by operating the inverter it is possible to set, for example, the frequency of operation of the electric motor, its operating current, the acceleration and deceleration ramps, characteristics relating to optional external transducers for controlling the speed, the use of filters for suitability of operation in a residential environment, the use of the inverter as a master inverter for driving inverters associated with other electric motors, saving of the operating modes of the electric motor, etc..

A drawback of the solution involving control buttons supported directly by the motor is constituted by the difficulty of operating the controls if the motor is positioned in areas that are not easily accessible.

On the other hand, with motors with onboard inverters which can be controlled by way of a remote control panel, there is a certain inconvenience if it is necessary to move the motor.

Document US7196485 discloses a ceiling fan with a motor and a controller, controlled by a wireless remote. Document US2009/146605 discloses a projector with a motor, the projector controlled by a wireless remote and having a receptacle for the wireless remote.

The aim of the present invention is to make available an electric motor with onboard inverter which is capable of eliminating the above-mentioned drawbacks.

Within this aim, an object of the present invention is to provide an electric motor with onboard inverter which is very simple in structure and which is low-cost, so as to make its use advantageous from an economic viewpoint as well.

This aim and these and other objects which will become more apparent hereinafter are all achieved by an electric motor with onboard inverter according to claim 1.

Further characteristics and advantages of the invention will become more apparent from the description of some preferred, but not exclusive, embodiments of an electric motor with onboard inverter, which are illustrated by way of non-limiting example in the accompanying drawings wherein:

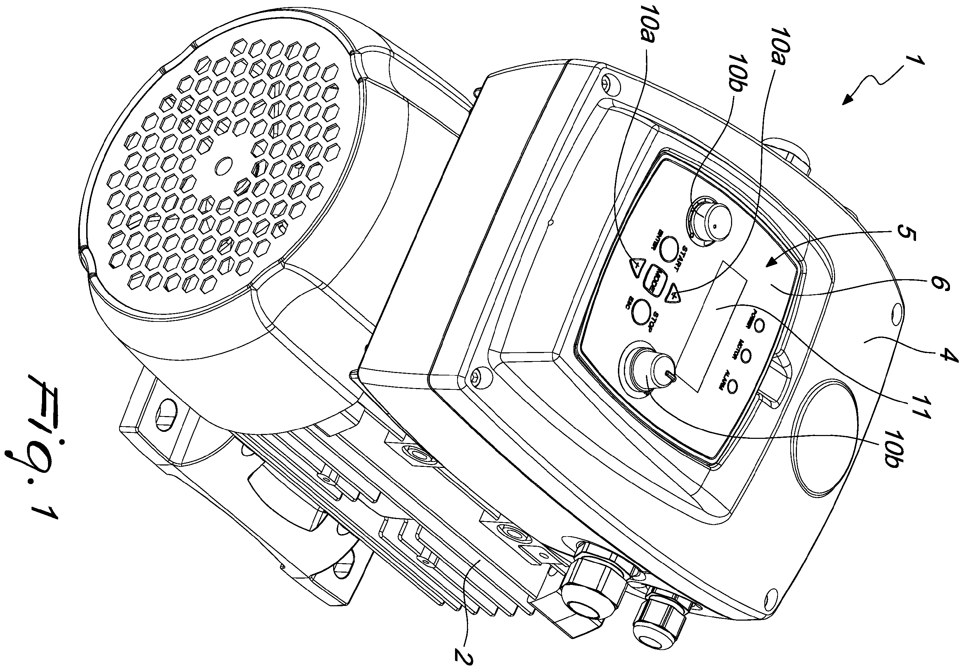

Figure 1 is a perspective view of the electric motor according to the invention;

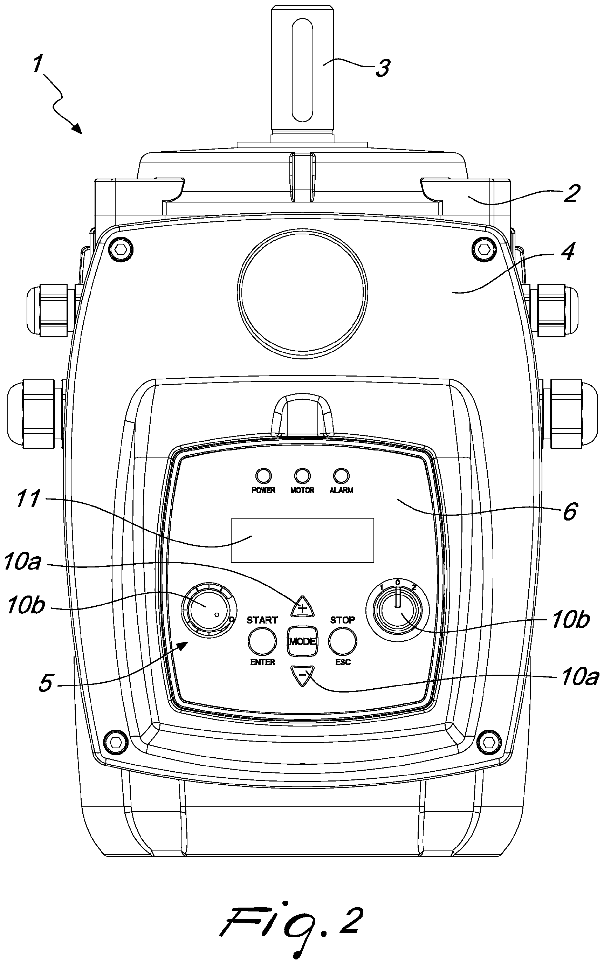

Figure 2 is a plan view of the electric motor;

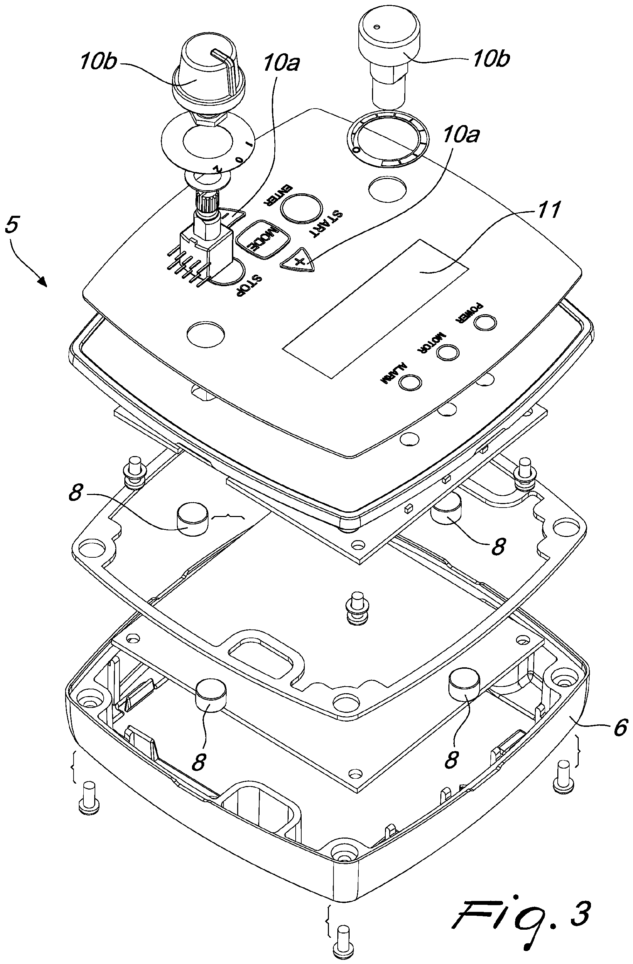

Figure 3 is an exploded perspective view of the remote control means of the wireless type;

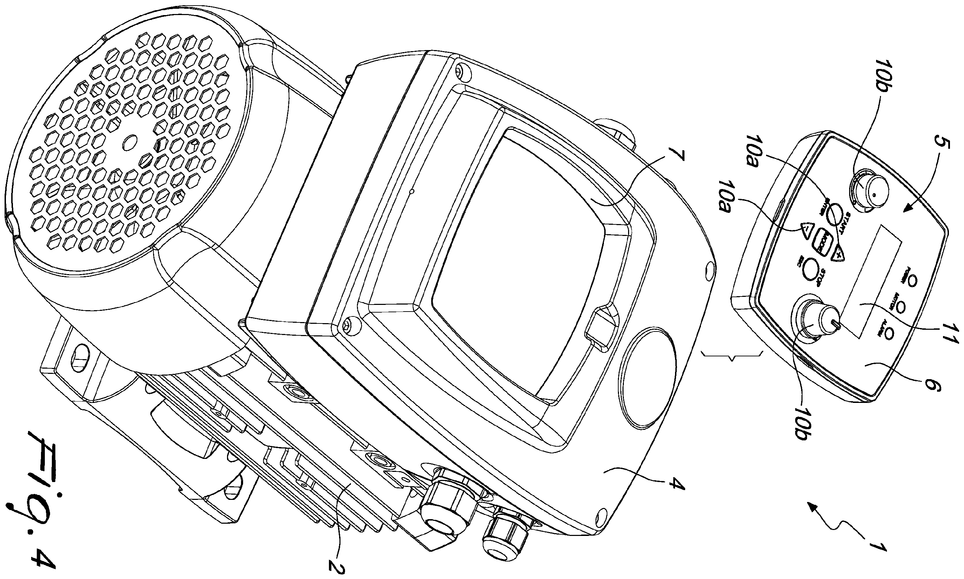

Figure 4 is another perspective view of the electric motor and, separate, the remote control means of the wireless type.

In the embodiments illustrated, individual characteristics shown in relation to specific examples may in reality be interchanged with other, different characteristics, existing in other embodiments.

With reference to the figures, the present invention relates to an electric motor, generally indicated with the reference numeral 1, with onboard inverter.

The electric motor 1 comprises a motor body 2 which is associated with at least one output shaft 3 and supports an inverter 4 for adjusting the speed of the output shaft 3.

Advantageously, the electric motor 1 comprises a three-phase asynchronous motor.

According to the present invention, the electric motor 1 comprises remote control means of the wireless type 5 of the inverter 4.

Conveniently, the remote control means of the wireless type 5 comprise a remote control 6.

Preferably, the remote control means of the wireless type 5 are adapted to set one or more operating parameters selected from the group that comprises:
- the frequency of operation of the electric motor;
- the current of the electric motor;
- the acceleration and deceleration ramps;
- characteristics relating to an optional external transducer for controlling the speed;
- the use of the inverter as the master inverter for driving inverters associated with other electric motors;
- saving of the operating modes of the electric motor.

According to a preferred embodiment, the remote control means of the wireless type 5 are powered by at least one rechargeable battery.

In this regard, the electric motor 1 is associated or provided with a device for recharging the rechargeable battery or batteries of the remote control means of the wireless type 5.

Advantageously the inverter 4 comprises a receptacle 7 for the remote control 6.

According to a preferred embodiment, both the receptacle 7 and the remote control 6 have a respective outer containment enclosure that is watertight.

Preferably, the recharging device is defined on the inverter 4 and, specifically, is arranged at the receptacle 7.

Conveniently, the recharging device comprises an induction-type battery charger.

In this manner, the rechargeable battery or batteries of the remote control 6 are recharged whenever the remote control 6 is stowed in the receptacle 7; in this regard, the choice of the induction-type battery charger makes it possible to provide both the receptacle 7 and the remote control 6 without contacts or electrical connectors and this ensures, evidently, an effective watertight seal of the inverter 4 and of the remote control means of the wireless type 5.

According to a further aspect, the remote control means of the wireless type 5 support at least one magnet element 8 in order to enable the user to detachably couple it, in a manner that is extremely practical and effective, to metallic supporting bodies which are generally present in the environments in which the electric motor 1 is installed.

Finally, it should be noted that the remote control means of the wireless type 5 can be provided with actuation elements that can be constituted by buttons 10a or by rotary controls 10b.

Advantageously, the actuation elements present on the remote control means of the wireless type 5 can be constituted both by buttons 10a and by rotary controls 10b. In this manner, according to practical requirements or to user preference, it can be decided whether to use the buttons 10a or the rotary controls 10b.

Conveniently, the remote control means of the wireless type 5 can be associated with a display 11 and, optionally, with indicator lights.

The use of an electric motor 1 according to the invention is evident from the foregoing description.

In particular, it is possible, thanks to the remote control means of the wireless type 5, to control the inverter 4 arranged aboard the electric motor 1 remotely and without, necessarily, moving to the remote control panel.

Furthermore, thanks to the induction-type battery charger, it is possible to ensure the seal against water and humidity both of the remote control 6 and of the inverter 4 since no electrical connectors or contacts need to be provided.

All the characteristics of the invention, indicated above as advantageous, convenient or similar, may also be missing or be substituted by equivalent characteristics, as long as they fall under the terms of the claims.

The invention, thus conceived, is susceptible of numerous modifications and variations, provided they are within the scope of the appended claims.

In practice it has been found that in all the embodiments the invention has achieved the intended aim and objects.

In practice the materials employed, as well as the dimensions and the contingent shapes, may be any according to requirements.

Moreover, all the details may be substituted by other, technically equivalent elements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An electric motor (1) with onboard inverter (4), the electric motor (1) comprising a motor body (2) which is associated with at least one output shaft (3) and supports the inverter (4) for adjusting the speed of said at least one output shaft (3), wherein said electric motor (1) further comprises remote control means of the wireless type (5) for said inverter (4), said remote control means (5) comprising a remote control (6) that is removably supported in a receptacle (7) of said inverter (4).

2. The electric motor (1) according to claim 1, wherein said remote control means of the wireless type (5) are adapted to set one or more operating parameters selected from the group that comprises:
- the frequency of operation of said electric motor;
- the current of said electric motor;
- the acceleration and deceleration ramps;
- characteristics relating to an optional external transducer for controlling the speed;
- the use of said inverter as the master inverter for driving inverters associated with other electric motors;
- saving of the operating modes of the electric motor.

3. The electric motor (1) according to one or more of the preceding claims, wherein said electric motor (1) is a three-phase asynchronous motor.

4. The electric motor (1) with onboard inverter according to claim 1, wherein said remote control means of the wireless type (5) are powered by at least one rechargeable battery.

5. The electric motor (1) according to claim 4, wherein said electric motor (1) comprises a device for recharging said at least one rechargeable battery.

6. The electric motor (1) according to claim 5, wherein said receptacle (7) and said remote control (6) are watertight.

7. The electric motor (1) according to claim 6, wherein said receptacle (7) is associated with said recharging device.

8. The electric motor (1) according to claim 7, wherein said recharging device comprises an induction-type battery charger.

9. The electric motor (1) according to one or more of the preceding claims, wherein said remote control means of the wireless type (5) support at least one magnet element (8) adapted to enable the user to detachably couple said remote control means of the wireless type (5) to metallic supporting bodies.

10. The electric motor (1) according to one or more of the preceding claims, wherein said remote control means of the wireless type (5) have actuation elements which comprise buttons (10a) and/or rotary controls (10b).

## Patentansprüche

1. Ein Elektromotor (1) mit gehäuseintegriertem Umrichter (4), wobei der Elektromotor (1) einen Motorkörper (2) umfasst, der mit mindestens einer Abtriebswelle (3) verbunden ist und den Umrichter (4) zur Anpassung der Geschwindigkeit der mindestens einen Abtriebswelle (3) trägt, wobei der Elektromotor (1) weiter Fernsteuerungsmittel (5) vom drahtlosen Typ für den Umrichter (4) umfasst, wobei die Fernsteuerungsmittel (5) eine Fernbedienung (6) umfassen, die herausnehmbar in einer Vertiefung (7) des Umrichters (4) aufgenommen ist.

2. Der Elektromotor (1) gemäß Anspruch 1, wobei die Fernsteuerungsmittel (5) vom drahtlosen Typ ausgebildet sind, um einen oder mehrere Betriebsparameter festzulegen, gewählt aus der Gruppe, die Folgendes umfasst:
- die Arbeitsfrequenz des Elektromotors,
- den Strom des Elektromotors,
- die Beschleunigungs- und Verzögerungsflanken,
- Eigenschaften betreffs eines optionalen externen Wandlers zur Steuerung der Geschwindigkeit,
- die Nutzung des Umrichters als Master-Umrichter zum Antreiben von Umrichtern, die mit anderen Elektromotoren verknüpft sind,
- das Speichern der Betriebsarten des Elektromotors.

3. Der Elektromotor (1) gemäß einem oder mehreren der obigen Ansprüche, wobei der Elektromotor (1) ein Drehstrom-Asynchronmotor ist.

4. Der Elektromotor (1) mit gehäuseintegriertem Umrichter gemäß Anspruch 1, wobei die Fernsteuerungsmittel (5) vom drahtlosen Typ von mindestens einer wieder aufladbaren Batterie mit Strom versorgt wird.

5. Der Elektromotor (1) gemäß Anspruch 4, wobei der Elektromotor (1) eine Vorrichtung zum Wideraufladen der mindestens einen wieder aufladbaren Batterie umfasst.

6. Der Elektromotor (1) gemäß Anspruch 5, wobei die Vertiefung (7) und die Fernsteuerung (6) wasserfest sind.

7. Der Elektromotor (1) gemäß Anspruch 6, wobei die Vertiefung (7) mit der Ladevorrichtung verbunden ist.

8. Der Elektromotor (1) gemäß Anspruch 7, wobei die Ladevorrichtung ein Batterieladegerät vom Induktionstyp umfasst.

9. Der Elektromotor (1) gemäß einem oder mehreren der obigen Ansprüche, wobei die Fernsteuerungsmittel (5) vom drahtlosen Typ mindestens ein Magnetelement (8) tragen, das ausgebildet ist, um es dem Benutzer zu ermöglichen, die Fernsteuerungsmittel (5) vom drahtlosen Typ lösbar mit tragenden Metallkörpern zu koppeln.

10. Der Elektromotor (1) gemäß einem oder mehreren der obigen Ansprüche, wobei die Fernsteuerungsmittel (5) vom drahtlosen Typ Betätigungselemente haben, die Tasten (10a) und/oder Drehschalter (10b) umfassen.

## Revendications

1. Moteur électrique (1) doté d'un onduleur intégré (4), le moteur électrique (1) comprenant un corps de moteur (2) qui est associé à au moins un arbre de sortie (3) et supporte l'onduleur (4) pour régler la vitesse dudit au moins un arbre de sortie (3), dans lequel ledit moteur électrique (1) comprend en outre un moyen de commande à distance du type sans fil (5) pour ledit onduleur (4), ledit moyen de commande à distance (5) comprenant une télécommande (6) qui est supportée de manière amovible dans un réceptacle (7) dudit onduleur (4).

2. Moteur électrique (1) selon la revendication 1, dans lequel ledit moyen de commande à distance du type sans fil (5) est adapté pour régler un ou plusieurs paramètres de fonctionnement choisis dans le groupe qui comprend :
- la fréquence de fonctionnement dudit moteur électrique ;
- le courant dudit moteur électrique ;
- les rampes d'accélération et de décélération ;
- des caractéristiques concernant un transducteur externe optionnel pour commander la vitesse ;
- l'utilisation dudit onduleur en tant qu'onduleur maître pour piloter des onduleurs associés à d'autres moteurs électriques ;
- la sauvegarde des modes de fonctionnement du moteur électrique.

3. Moteur électrique (1) selon l'une ou plusieurs des revendications précédentes, dans lequel ledit moteur électrique (1) est un moteur asynchrone triphasé.

4. Moteur électrique (1) doté d'un onduleur intégré selon la revendication 1, dans lequel ledit moyen de commande à distance du type sans fil (5) est alimenté par au moins une batterie rechargeable.

5. Moteur électrique (1) selon la revendication 4, dans lequel ledit moteur électrique (1) comprend un dispositif pour recharger ladite au moins une batterie rechargeable.

6. Moteur électrique (1) selon la revendication 5, dans lequel ledit réceptacle (7) et ladite télécommande (6) sont étanches à l'eau.

7. Moteur électrique (1) selon la revendication 6, dans lequel ledit réceptacle (7) est associé audit dispositif de recharge.

8. Moteur électrique (1) selon la revendication 7, dans lequel ledit dispositif de recharge comprend un chargeur de batterie du type à induction.

9. Moteur électrique (1) selon l'une ou plusieurs des revendications précédentes, dans lequel ledit moyen de commande à distance du type sans fil (5) supporte au moins un élément formant aimant (8) adapté pour permettre à l'utilisateur de coupler de manière détachable ledit moyen de commande à distance du type sans fil (5) à des corps de support métalliques.

10. Moteur électrique (1) selon l'une ou plusieurs des revendications précédentes, dans lequel ledit moyen de commande à distance du type sans fil (5) comporte des éléments d'actionnement qui comprennent des boutons (10a) et/ou des commandes rotatives (10b).
